(19) Europäisches Patentamt
European Patent Office
Office européen des brevets

(11) EP 1 436 953 B1

(12) **EUROPEAN PATENT SPECIFICATION**

(45) Date of publication and mention of the grant of the patent:
**17.08.2005 Bulletin 2005/33**

(21) Application number: **01980499.6**

(22) Date of filing: **18.10.2001**

(51) Int Cl.[7]: **H04L 12/56**, H04L 29/06

(86) International application number:
**PCT/EP2001/012060**

(87) International publication number:
**WO 2003/036881 (01.05.2003 Gazette 2003/18)**

(54) **A METHOD FOR SCHEDULING OF PACKET DATA AND A PACKET DATA SCHEDULER**

VERFAHREN ZUR PLANNUNG VON PACKETDATENÜBERTRAGUNG UND PAKETABLAUFSTEUERUNG

PROCEDE D'ORDONNANCEMENT DE DONNEES PAR PAQUETS ET ORDONNANCEUR DE DONNEES PAR PAQUETS

(84) Designated Contracting States:
**AT BE CH CY DE DK ES FI FR GB GR IE IT LI LU MC NL PT SE TR**

(43) Date of publication of application:
**14.07.2004 Bulletin 2004/29**

(73) Proprietor: **Nokia Corporation**
**02150 Espoo (FI)**

(72) Inventors:
- **KOLA, Tero**
  **FIN-02600 Espoo (FI)**
- **WIGARD, Jeroen**
  **DK-9220 Aalborg (DK)**

(74) Representative:
**Leson, Thomas Johannes Alois, Dipl.-Ing.**
**Tiedtke-Bühling-Kinne & Partner GbR,**
**TBK-Patent,**
**Bavariaring 4**
**80336 München (DE)**

(56) References cited:
**EP-A- 0 859 492**
**EP-A- 1 133 109**
**US-A- 6 046 979**
**US-A- 6 148 001**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 436 953 B1

Printed by Jouve, 75001 PARIS (FR)

## Description

FIELD OF THE INVENTION

The present invention relates to a method for scheduling of packet data and to a correspondingly adapted packet data scheduler.

BACKGROUND OF THE INVENTION

With recent progress in communication technology, communication networks in use show a tendency to manage communication data in units of packets. Such networks are often referred to as packet switched networks or packet data networks. Packet data appear as at least one packet data flow in such a packet data network, said at least one packet data flow passes through a buffer memory, where - according to a need - the packet data are buffered.

A packet data flow is transmitted from a data source via the packet network to a destination. The source and destination may for example be subscriber and/or user terminals of the communication network. In case of the communication network being a radio communication network and/or telecommunication network according to the UMTS standard currently being defined by 3rd Generation Partnership Project 3GPP, such a terminal is referred to as user equipment UE. The communication network generally comprises a core network as a part of the network being independent of the connection technology of a terminal, and an access network as a part of the network being dependent on and/or specifically adapted to the connection technology of the terminal.

In case of radio communication networks, the access network is constituted by a so-called radio access network RAN which comprises a radio network controller RNC controlling a plurality of transceiver stations known in 3GPP as Node_B's (corresponding to base stations BS in GSM). A terminal communicates via the network with another terminal. That is, there is a downlink transmission from a Node_B via the radio interface (air interface) towards a terminal and an uplink transmission in reverse direction. Currently, UMTS networks under development adopt a WCDMA (Wideband Code Divisional Multiple Access) scheme for transmission.

It has to be noted that although in the foregoing and subsequently the present invention will be described with a certain focus on 3GPP UMTS systems, the present invention is applicable to any packet data network, whether UMTS or ATM or IP, or any other. Also, the present invention is not limited to radio communication systems. Rather, any transmission from the network side to the terminal may be referred to as downlink and likewise any transmission from a terminal to the network side may be referred to as uplink.

Any specific terminology as used in the present specification is referred to as an example only, i.e. for illustrative purposes only, and is not intended to be limiting for the present invention in any way. Rather, it exemplifies a particular way of implementation of the present invention.

Thus, the present invention as to be described herein after is explained with reference to an example of a packet scheduling method in a radio communication network and/or system, more particularly, for downlink shared channels DSCH's in a WCDMA system, and as forming part of a radio resource management RRM of the system. Nevertheless, the present invention can be used for scheduling any type of packet data channel.

It is assumed that the terminal (user equipment) is an a CELL_DCH state representing one of UTRAN connected modes (UTRAN = UMTS Terrestrial RAN, UMTS = Universal Mobile Telecommunication Standard). In the CELL_DCH state, a dedicated physical channel is allocated. The location of the user equipment is known on cell level and dedicated (DCH) or Shared (DSCH) transport channels can be used.

When the terminal is in the CELL_DCH state, regardless of the DSCH allocation for a non-real time radio bearer (NRT RB), inactive periods during DSCH transmission are not necessarily disadvantageous from the point of view of power consumption of the terminal. (A bearer means an information transmission path of defined properties.)

The DSCH is allocated for predetermined time periods, and a maximum DSCH allocation time period balances delays and prevents one terminal from blocking others, which is an effect which is likely to occur especially in systems where it is possible to have active data transmission to only one terminal simultaneously.

However, in case of e.g. IP packets (Internet Protocol) or other packets to be forwarded (via plural layers of the OSI-ISO communication layer model), the transmitted packets have a hierarchical packet structure. For example, a packet data unit PDU comprises a PDU header including control information and one or more service data units SDU representing the payload.

Thus, there is a risk that unnecessary and disadvantageous delays of IP packets with payload for radio link control (RLC SDU's) (RLC: Radio Link Control) will occur, which will occur if only a small amount of data had been left in the buffer. Stated in other words, a RLC SDU can not be reconstructed at the receiving side if the last segments (RLC PDU's) are delayed because they are not output from the buffer after the maximum allocation time period.

Stated in other words, Packet services are characterized by bursty behavior, meaning that the bitrate changes rapidly in time and that a lot of inactive periods exists. When such services are allocated to a non-time-divided channel, capacity is wasted due to the inactivity periods. This may also have a negative effect on the user equipment power consumption. Time-divided channels overcome these problems, but the maximum allocation time to one user equipment is a very critical parameter. The maximum allocation time balances delays and prevents one user equipment to block others, which could occur especially in systems, where it is only possible to have data transmission to one user equipment at a time.

In that case, RLC SDU cannot be reconstructed by the receiving side because the last segments (RLC PDUs) are delayed, which means the QoS is significantly decreased

The Application EP 1 133 109 discloses a method for scheduling of pocket data according to the preamble of claim 1 of this application.

## SUMMARY OF THE INVENTION

Hence, it is an object of the present invention to provide a method for scheduling of packet data and a packet data scheduler which prevent the occurrence of the above mentioned drawback.

According to the present invention this object is for example achieved by a method for scheduling of packet data of at least one packet data flow in a packet data network, said at least one packet data flow passing through a buffer memory, allocating said at least one packet data flow to be output from said buffer memory, detecting the lapse of a predetermined time period, during which said allocated packet data flow is to be output, outputting said packet data flow during the predetermined time period, characterized in that upon detecting the lapse of said time period, extending said time period, during which said allocated packet data flow is to be output, to an extended time period, dependent on the data amount remaining in said buffer memory at said detection and an output rate of said packet data flow.

According to favorable refinements of the present invention,

- a required transmission time for outputting said data amount remaining in said buffer memory at said detection is calculated by dividing said data amount remaining in said buffer memory at said detection by said output rate of said data flow,
- if said required transmission time is greater than the difference between the extended time period and said predetermined time period, outputting of data from said buffer memory is stopped at said detection,
- if said required transmission time is not greater than the difference between the extended time period and said predetermined time period, outputting of data from said buffer memory is continued upon said detection,
- outputting of data from said buffer memory is continued upon said detection until all data present in said buffer memory at said detection is output,
- continuing said outputting of data from said buffer memory is performed only for those data present in said buffer memory at said detection, while data arrived at said buffer memory after said detection are buffered in said buffer memory,
- said allocation of said at least one packet data flow for being output from said buffer memory is cancelled, if said data present in said buffer memory at said detection are output,
- said allocation of said at least one packet data flow for being output from said buffer memory is cancelled, if said required transmission time is greater than the difference between the extended time period and said predetermined time period,
- if said allocation of said at least one packet data flow for being output from said buffer memory is cancelled, an allocation of another one of said packet data flows is activated,
- said predetermined time is predetermined for a respective packet data flow,
- said predetermined time is dependent on a respective bit rate,
- said predetermined time Tmax is dependent on a number of packet data flows to be scheduled,
- said extended time period is obtained by multiplying said predetermined time period Tmax by an extension coefficient k,
- said extension coefficient k is predetermined and fixed,
- said extension coefficient k is determined dynamically,
- said extension coefficient k is determined dynamically based on a number of allocation periods n for which said packet data flow has been allocated to be output from said buffer memory,
- said extension coefficient is dynamically determined according to the rule $k(n) = f_1(n)/f_2(n)$ for $0 <= n < x$, $k(n) = 1$ otherwise, $f_1(n)$, $f_2(n)$ being a function of n such that the value of $f_1(n) > f_2(n)$ for any value of n, with $0 <= n < x$, and x being a natural number greater or equal than 1.In addition, according to the present invention this object is for example achieved by a packet data scheduler adapted to carry out the above method according to any of the preceding individual aspects.

According to favorable refinements of the present invention

- said packet data flow is a downlink packet data flow in a radio communication network, and said scheduler is implemented in a radio network controller,
- said packet data flow is an uplink packet data flow in a radio communication network, and said scheduler is implemented in a subscriber terminal.

By virtue of the present invention being implemented, at least the following advantages can be achieved:

1. unnecessary and disadvantageous delays of packets can be avoided (such as RLC PDU's in IP),
2. accordingly, since no data will be left in the buffer, the packets (such as RLC SDU's) can be reconstructed at the receiving side,
3. the method improves end user QoS (Quality of Service) by cutting down the transfer delays from a higher layer point of view (OSI-ISO layer),
4. one user (data flow) is prevented to block other users,
5. therefore, capacity of the network is improved in the sense of allowing data transmission for more users with tolerable delay,
6. the mean throughput of the users can be balanced if a smaller predetermined time period Tmax, during which said allocated packet data flow is to be output, is configured for high bit rates,
7. if the number of users (data flows) to be scheduled is high, tolerable delays can be guaranteed by reducing the value of Tmax accordingly,
8. transmission of the full (IP) packets will increase the experienced bit rate of the particular flow concerned,
9. the delay other flows experience by this is not significant and less than k*Tmax-Tmax, while the increase in bit rate of the particular single flow represents a more significant gain than the loss (delay) of the others, which if it is their turn, will also experience an increased bit rate.

## BRIEF DESCRIPTION OF THE DRAWINGS

The above and other features and advantages of the present invention will become more fully apparent upon referring to the description of preferred embodiments of the present invention when read in conjunction with the accompanying drawings. In the drawings:

Fig. 1 illustrates a basic relation between a data amount in a buffer over time in relation to an output bit rate changing with time for explanatory purposes,

Fig. 2 shows a relation between a data amount in a buffer over time in relation to an output bit rate, according to the present invention, for a first scenario,

Fig. 3 shows a relation between a data amount in a buffer over time in relation to an output bit rate, according to the present invention, for a second scenario,

Fig. 4 shows a relation between a data amount in a buffer over time in relation to an output bit rate, according to the present invention, for a third scenario,

Fig. 5 illustrates a flow chart for explaining the individual method steps according to an embodiment of the present invention,

Fig. 6 illustrates a block diagram of a buffer in a packet data network with an associated control means, which control means can be adapted to carry out the method according to the present invention, and

Fig. 7 illustrates a flow chart for explaining the individual method steps according to yet another embodiment of the present invention.

## DETAILED DESCRIPTION OF THE EMBODIMENTS

The present invention will now be described in greater detail with reference to the drawings.

Fig. 6 illustrates a block diagram of a buffer in a packet data network with an associated control means, which control means can be adapted to carry out the method according to the present invention. As shown, a packet data flow packet_data_in with a data rate (bit rate) rate_in enters a buffer BUF, and is output as a packet data flow packet_data_out with an output rate rate_out. Note that rate_in may be equal or different from rate_out. The illustrated packet data flow is only one flow of plural flows that may flow via the buffer. The flow may be assumed to be associated to one user / terminal, while also plural flows may be associated to a single user. In connection with the chosen example, such a data flow constitutes a non-realtime radio bearer (NRT RB). The buffer BUF may be constituted of plural buffer elements BUF_1,... BUF_i, ...BUF_N, which may be physically distinct from each other, or represent partitions of a single physical buffer memory. For the purposes of explaining the present invention, it is assumed that each buffer element is associated to a different NRT RB.

Each buffer element such as BUF_1 is monitored in terms of its buffer fill level in order to obtain a knowledge of the amount of data present in the buffer (element) at each time. This information is indicated as data_amount to a control means CTRL. The control means controls the entire buffer and may thus address each buffer element BUF_1,... BUF_i, ...BUF_N individually. (Fig. 6 shows only BUF_1 to be monitored and/or to be under control of the control means CTRL, in order to keep the drawing simple). The control means CTRL receives at least one input signal "allocation" from a superior control instance. In response to the control signal "allocation" the control means CTRL allocates at least one packet data flow to be output from said buffer memory, i.e. from the respective buffer element associated to the flow. Also, the control means (internally and not shown) maintains a knowledge of a number n of allocation periods which have previously been assigned to the specific bearer and/or buffer element. This may for example be accomplished by counting means adapted to count the "allocation" control signals issued with regard to a specific bearer.

Thus, Fig. 6 illustrates a basic scheduling of packet data of at least one packet data flow in a packet data network, said at least one packet data flow passing through a buffer memory BUF, wherein said at least one packet data flow to be output from said buffer memory is allocated by the control means CTRL.

The subsequent description focuses on a case in which only one data flow is active, i.e. output at a time, in order to keep the explanation simple. Nevertheless, it is to be understood that more than one data flows may simultaneously be active, and the method according to the present invention is then applied to each of them.

For the subsequent description, a case is assumed in which the present invention is applied, as a mere example only, to a downlink data flow of a physical downlink shared channel PDSCH and/or a downlink shared channel DSCH, and the buffer froming part of a network element in the radio link control RLC of the network.

Fig. 1 illustrates a basic relation between a data amount in a buffer over time in relation to an output bit rate changing with time for explanatory purposes. The upper part of Fig. 1 (as well as of Figs. 2 to 4) represents a data-amount-versus-time-diagram, and the lower part represents a bitrate- (output bitrate)-versus-time-diagram.

Initially, the buffer associated to the data flow has a certain buffer fill level, i.e. contains a certain amount A of data. At a time t1 it is assumed that the buffer and/or data flow is allocated so that the packet data flow is output from said buffer memory element (PDSCH data transmission starts). Data are output at a first bit rate up to a time t2. Data output is illustrated to be effected in a stepwise fashion due to the data being output in units of packets, each step taking a period TTI (transmission time interval). At a time t2, the output bit rate changes to another bit rate (PDSCH bit rate changes). At the time t2, a data amount A1 still remains in the buffer. Since the changed bit rate is higher than the (initial) bit rate before, the slope of the data-amount-versus-time-curve changes and becomes steeper. At a time t3, the buffer is then empty (RLC buffer empty), provided that no new data have arrived since t1 (and/or t2). If the buffer is empty, the data flow is de-allocated and another data flow is allocated for being output from its corresponding buffer element.

Fig. 5 illustrates a flow chart for explaining the individual method steps according to an embodiment of the present invention. The steps may be implemented as a control procedure in software realization in the control means CTRL shown in Fig. 6, which then acts as a packet scheduler according to the present invention.

The method begins in step S50. In a subsequent step (not shown) the data flow to be output is allocated, i.e. there is an allocating of said at least one packet data flow to be output from said buffer memory and/or buffer memory element. At allocation, a timer is reset and started. The timer monitors the lapsed time, and is adapted to detect the lapse of a predetermined time period Tmax, during which said allocated packet data flow is to be output, while said packet data flow is being output during the predetermined time period. These functionalities are represented in step S51 of Fig. 5. The predetermined time period is illustrated in Figs. 1 to 4 as the difference between t2 and t1, i.e. t2-t1, and is referred to as maximum PDSCH allocation time Tmax in the context of the example chosen for describing the present invention. If the PDSCH allocation has not lasted for Tmax (NO in step S51), the method flow loops and remains in the processing of step S51, until the PDSCH allocation time Tmax is detected to have lapsed (YES in step S51).

Then, the method proceeds with step S52. In step S52 the required transmission time $T_T$ is calculated according to a formula $T_T$ = data_amount/$R_{DSCH}$. That is, the time $T_T$ is dependent on the data amount remaining in said buffer memory (element) at said detection (labeled A1 in Figs. 1 to 4) and an output rate of said packet data flow referred to as $R_{DSCH}$ at the time of said detection. Stated in other words, a required transmission time $T_T$ for outputting said data amount remaining in said buffer memory at said detection is calculated by dividing said data amount remaining in said buffer memory at said detection by said output rate of said data flow at that time, i.e. the current output bit rate. This calculation may be performed by a MAC functionality (Media Access Control) in case of a UMTS communication network, for example.

Thereafter, in step S53, a comparison is made as to whether the required transmission time $T_T$ is greater than a time period k*Tmax-Tmax or not. The factor k (extension coefficient) may be set to an arbitrary value according to the specific needs, and only for explanatory purposes k=1.5 has been chosen for the illustration in Figs. 2 to 4. The term "k*Tmax-Tmax" is also represented in the Figures 2 to 4 by the time difference "t3-t2". Stated in other words, at the time t2 (when Tmax has lapsed) it is checked whether outputting the remaining data, which requires an additional transmission time $T_T$, will end after a predetermined extended time period k*Tmax or not. That is, it is checked whether Tmax+$T_T$ > k*Tmax.

If the comparison in step S53 yields YES, the method proceeds to step S55 and the transmission is stopped. That is, the allocation time is not extended over its regular maximum allocation time and the data not yet output at Tmax from the buffer remains in the buffer.

If, however, the comparison in step S53 yields NO, the method proceeds to step S54 and the transmission is continued until the data amount remaining in the buffer at Tmax is output from the buffer. That is, the allocation time is extended over its regular maximum allocation time and the data not yet output at Tmax from the buffer does not remain in the buffer. The data is in this case completely output at k*Tmax at the latest (note that this is based on an assumption that after Tmax no new data arrives at the buffer). If this assumption, however, does not hold, the present invention is adapted such that continuing said outputting of data from said buffer memory is performed only for those data present in said buffer memory at said detection, while data arrived at said buffer memory after said detection are buffered in said buffer memory.

After step S54, i.e. upon completing output of the data which remained at Tmax, the method then advances to step S55 and the transmission is stopped.

Upon stopping transmission, a new data flow is allocated to be output via the bearer. This implies, that the previously concerned allocation of a data flow to the bearer is cancelled. Thus, the bearer capacity is efficiently used, and one has not to wait for allocating a new data flow to the bearer until the extended time period is over, since rather immediately after "cleaning" the buffer from the data which remained at the time Tmax has lapsed, another data flow may be allocated for being output.

Thus, as has been explained in the foregoing, this means that upon detecting the lapse of said time period Tmax, said time period Tmax, during which said allocated packet data flow is to be output, is conditionally extended to a predetermined extended time period k*Tmax, dependent on the data amount remaining in said buffer memory at said detection and an output rate of said packet data flow.

Also, if said required transmission time $T_T$ is greater than the difference k*Tmax - Tmax between the extended time period and said predetermined time period, outputting of data from said buffer memory is stopped at said detection, whereas if said required transmission time $T_T$ is not greater than the difference k*Tmax - Tmax between the extended time period and said predetermined time period, outputting of data from said buffer memory is continued upon said detection. Thus, by virtue of conditionally extending the allocation time period for a packet data flow, outputting of data from said buffer memory can be enabled to be continued upon said detection until all data present in said buffer memory at said detection is output.

With regard to a configuration of parameters used in connection with the present invention, said predetermined time Tmax is predetermined for a respective packet data flow. Nevertheless, alternatively or additionally, said predetermined time Tmax may be dependent on a respective bitrate used. Still further, alternatively or additionally to any of preceding described combination possibilities, said predetermined time Tmax may be dependent on a number of packet data flows to be scheduled. In any case, the period Tmax is defined by RNC configuration parameters. Likewise, also the parameter k for extending Tmax to a value of k*Tmax can be arbitrarily set to values differing from k=1.5 as mentioned above. In order that the period may be extended, however, k (extension coefficient) should be set to a value of greater than 1.

Still further, according to a modification (not shown) of the flowchart, prior to the calculating step S52, there could be implemented a check as to whether the calculation and comparison etc. (steps S52, S53, S54) are worth being performed. Namely, in case the input data rate rate_in is greater or equal to the output rate rate_out, the buffer (element) may never be emptied (assuming that the rates applied for comparison remain unchanged), regardless of the extension to be applied to the maximum output period. In this case, the transmission would be stopped forcedly after the lapse of Tmax.

Heretofore, the invention has been described in terms of the method steps performed. Figs. 2 to 4 show the buffer fill level versus time with the present invention being applied, in different scenarios already described before.

Fig. 2 illustrates a case, in which the required transmission time $T_T$ after lapse of Tmax, (calculated at t2), would exceed k*Tmax-Tmax (k=1.5), so that the transmission is stopped at t2, i.e. after lapse of Tmax. The period Tmax is then not extended. This corresponds to the branch "YES" in step S53 leading to step S55 in Fig. 5.

Other common correspondences between the flowchart of Fig. 5 and Figs. 2 to 4 are, for example:

S50 corresponds to and/or coincides with time t1,
S51 loops back to S51 during the time from t1 to t2,
S52 is performed at time t2,
S53 is performed at time t2, slightly after S52.

For the scenario illustrated in Fig. 2, step S55 then coincides with t2.

Fig. 3 illustrates a scenario in which the required transmission time $T_T$ after lapse of Tmax, (calculated at t2), would not exceed k*Tmax-Tmax (k=1.5), so that the transmission is not already stopped at t2, i.e. after lapse of Tmax. The period Tmax is then extended. This corresponds to the branch "NO" in step S53 leading to step S54 in Fig. 5.

Thus, execution of step S54 in Fig. 5 is located in Fig. 3 in the interval between time t2 and t3, while the continued transmission already stops on or before t3 (but after t2) due to the buffer being emptied (represented by the curve indicating the data amount in buffer crossing the time axis).

For the scenario illustrated in Fig. 3, step S55 then coincides with the time when the bit rate crosses the time axis (shown in the lower part of Fig. 3).

Fig. 4 shows a scenario, in which new data arrives at the buffer after Tmax has already lapsed, i.e. new data arrive after t2, and if the check conducted in step S53 yielded NO beforehand. Then, the transmission is continued until the data remaining in the buffer at time t2 is output, and thereupon the transmission is stopped while the newly arrived data remain in the buffer.

According to a modification to the scenario shown in Fig. 4, it may not necessarily be the new data which remain in the buffer. Normally, i.e. in the case described before, the buffer may be assumed to be a FIFO (first in first out) buffer. Then, the oldest data are output and the most recent one's remain in the buffer, as explained before.

If, however, according to a modification the buffer may be a buffer handling data packets on a basis of an assigned priority to the packets, then the packets having the highest priority may be output first, while those of lower or lowest priority will remain in the buffer. For example, header data could be assigned a higher priority than payload data since the header data are inevitably required for reconstruction of the payload data at the receiving end.

Fig. 7 of the drawings illustrates a flowchart for explaining the individual method steps according to yet another embodiment of the present invention.

It is to be noted that Fig. 7 is largely identical to the flowchart of Fig. 5 with the exception that step S73 in Fig. 7 differs from step S53 in Fig. 5. Thus, the description as given in terms of steps S50, S51, S52, S54 and S55 of Fig. 5 likewise hold for steps S70, S71, S72, S74 and S75, respectively. Also, all modifications and variations described in connection with Fig. 5 also can be adopted for the another embodiment shown in Fig. 7.

According to the embodiment shown in Fig. 5, a predetermined and fixed parameter k (of for example 1.5) for extending the time period Tmax has been used. In contrast thereto, according to the yet another embodiment shown in Fig 7, a dynamically determined parameter k as an extension coefficient is used.

The goal of having an extension coefficient bigger than 1 is that the QoS is improved. Especially small packet calls (call forwarding packets of small size) profit a lot from this. Consider a packet call, which can be sent in 1.1*Tmax. If the factor would be equal to 1, the delay of this packet would be equal to the transmission time plus the time between two allocation periods. Thus having a factor greater than 1 improves the QoS of this packet call significantly, since the time between the two allocation periods is removed.

For large packet calls, the QoS is not improved a lot, since a lot of allocation periods are required anyway. On the other hand, increasing the allocation period of one packet call, decreases the QoS of the other packet calls. Thus the allocation period should only be increased for small packets.

However the packet size is not always known, but it is known how often a user has been scheduled. Big packet calls have to be scheduled more often than small ones. According to this another embodiment of the present invention, it is proposed to use this information for determining the scheduling period. An example of how to implement the dynamic scheduling period can be seen below in the "example rule":

Example rule:

$$k(n) = (n+2)/(n+1) \qquad \text{for } n < 5$$

$$k(n) = 1 \qquad \text{otherwise}$$

where n is the number of allocation periods which have previously been assigned to this bearer. Thus in the first allocation period (with no previous allocation period, i.e. n=0) the factor k(0) will be equal to 2, then k(n=1)=1,5, etc. When n is greater than 4, a factor 1 can be used since the packet call is so big, that a factor larger then 1 does not improve the QoS significantly. Note that in case of n=1, no extension is effected.

However, the above rule is to be regarded as an example only and various modifications can be made thereto. The limit of n < 5 could be modified to another number and also the ratio of (n+2)/(n+1) could be modified with a prerequisite that in all cases the numerator (a function, $f_1$, of n) has always to be greater than the denominator (also a function, $f_2$, of n), so that the ratio thereof yields a value greater than 1 for all cases of n to be considered. More generally, the rule can be expressed as $k(n) = f_1(n)/f_2(n)$ for $0 <= n < x$, $k(n) = 1$ otherwise,

where $f_1(n)$, $f_2(n)$ is a function of n such that the value of $f_1(n) > f_2(n)$ for any value of n, with $0 <= n < x$, and x being a natural number greater or equal than 1.

Thus, in step S73, the time period Tmax is extended by a dynamically determined parameter k, k being determined in a preceding step (not shown) according to a rule, an example of which rule has been given before. The determination of the parameter k then makes use of the number n of allocation periods which have previously been assigned to this bearer. As mentioned herein before, the control means maintains a knowledge of a number n of allocation periods which have previously been assigned to the specific bearer and/or buffer element. This may for example be accomplished by counting means adapted to count the "allocation" control signals issued with regard to a specific bearer.

Heretofore, the present invention has been described with a focus on a DSCH / PDSCH in a WCDMA UMTS radio communication network and for downlink direction. Under such assumptions, the present invention may be implemented (as a correspondingly adapted control means CTRL (packet data scheduler) in Fig. 6) in the MAC layer of the radio network controller RNC.

Nevertheless, in case of the present invention being implemented for uplink direction, the control means shown in Fig. 6 may be implemented as a packet scheduler in the user equipment UE (terminal).

Also, the present invention is not restricted to an implementation for PDCH / DSCH channels but may be implemented in connection with FACH (Forward Access Channel) or DCH (Dedicated Channel) channels or any others.

Likewise, the present invention is not limited to be implemented for radio communication networks with a radio access network based on WCDMA, but may be implemented in connection with any other radio access network.

Still further, the present invention is not limited to the use in connection with radio access networks, but may be used also with non-radio, fixed communication networks, as long as packet data are transmitted via these networks.

Accordingly, as has been described herein above, the present invention relates to a method for scheduling of packet data of at least one packet data flow in a packet data network, said at least one packet data flow passing through a buffer memory 1, BUF_1, BUF_i, BUF_N, allocating said at least one packet data flow to be output from said buffer memory, detecting the lapse of a predetermined time period Tmax, during which said allocated packet data flow is to be output, outputting said packet data flow during the predetermined time period, characterized in that upon detecting the lapse of said time period Tmax, extending said time period Tmax, during which said allocated packet data flow is to be output, to an extended time period k*Tmax, dependent on the data amount remaining in said buffer memory at said detection and an output rate of said packet data flow.

Although the present invention has been described herein above with reference to its preferred embodiments, it should be understood that numerous modifications may be made thereto. It is intended that all such modifications fall within the scope of the appended claims.

## Claims

1. A method for scheduling of packet data of at least one packet data flow in a packet data network, said at least one packet data flow passing through a buffer memory **(1, BUF_1, BUF_i, BUF_N),**
   allocating said at least one packet data flow to be output from said buffer memory,
   detecting the lapse of a predetermined time period **(Tmax),** during which said allocated packet data flow is to be output,
   outputting said packet data flow during the predetermined time period,
   **characterized in that**
   upon detecting the lapse of said time period **(Tmax),**
   extending said time period **(Tmax)**, during which said allocated packet data flow is to be output, to an extended time period **(k*Tmax),** dependent on
   the data amount remaining in said buffer memory at said detection and
   an output rate of said packet data flow.

2. A method according to claim 1, wherein
   a required transmission time **(TT)** for outputting said data amount remaining in said buffer memory at said detection is calculated by dividing said data amount remaining in said buffer memory at said detection by said output rate of said data flow.

3. A method according to claim 2, wherein
   if said required transmission time **(TT)** is greater than the difference **(k*Tmax - Tmax)** between the extended time period and said predetermined time period, outputting of data from said buffer memory is stopped at said detection.

4. A method according to claim 2, wherein
   if said required transmission time **(TT)** is not greater than the difference **(k*Tmax - Tmax)** between the extended time period and said predetermined time period, outputting of data from said buffer memory is continued upon said detection.

5. A method according to claim 4, wherein
   outputting of data from said buffer memory is continued upon said detection until all data present in said buffer memory at said detection is output.

6. A method according to claim 4 or 5, wherein
   continuing said outputting of data from said buffer memory is performed only for those data present in said buffer memory at said detection, while data arrived at said buffer memory after said detection are buffered in said buffer memory.

7. A method according to claim 5 or 6, wherein
   said allocation of said at least one packet data flow for being output from said buffer memory is cancelled,
   if said data present in said buffer memory at said detection are output.

8. A method according to claim 3, wherein
   said allocation of said at least one packet data flow for being output from said buffer memory is cancelled,
   if said required transmission time **(TT)** is greater than the difference **(k*Tmax - Tmax)** between the extended time period and said predetermined time period.

9. A method according to claim 7 or 8, wherein
   if said allocation of said at least one packet data flow for being output from said buffer memory is cancelled, an allocation of another one of said packet data flows is activated.

**10.** A method according to claim 1, wherein said predetermined time (Tmax) is predetermined for a respective packet data flow.

**11.** A method according to claim 1 or 10, wherein said predetermined time (Tmax) is dependent on a respective bit rate.

**12.** A method according to claim 1, 10 or 11, wherein said predetermined time (Tmax) is dependent on a number of packet data flows to be scheduled.

**13.** A method according to claim 1, wherein said extended time period is obtained by multiplying said predetermined time period (Tmax) by an extension coefficient (k).

**14.** A method according to claim 13, wherein said extension coefficient (k) is predetermined and fixed.

**15.** A method according to claim 13, wherein said extension coefficient (k) is determined dynamically.

**16.** A method according to claim 15, wherein said extension coefficient (k) is determined dynamically based on a number of allocation periods (n) for which said packet data flow has been allocated to be output from said buffer memory.

**17.** A method according to claim 16, wherein said extension coefficient is dynamically determined according to the rule

$$k(n) = f_1(n)/f_2(n) \text{ for } 0 <= n < x$$

$$k(n) = 1 \text{ otherwise,}$$

$f_1(n)$, $f_2(n)$ being a function of n such that the value of $f_1(n) > f_2(n)$ for any value of n, with $0 <= n < x$, and x being a natural number greater or equal than 1.

**18.** A packet data scheduler adapted to carry out the method according to any of the preceding claims 1 to 17.

**19.** A scheduler according to claim 18, wherein said packet data flow is a downlink packet data flow in a radio communication network, and said scheduler is implemented in a radio network controller.

**20.** A scheduler according to claim 18, wherein said packet data flow is an uplink packet data flow in a radio communication network, and said scheduler is implemented in a subscriber terminal.

**Patentansprüche**

**1.** Verfahren zur Zeitablaufplanung von Paketdaten mindestens eines Paketdatenflusses in einem Paketdatennetzwerk, wobei der mindestens eine Paketdatenfluss einen Pufferspeicher (1, BUF_1, BUF_i, BUF_N) durchläuft, mit den Schritten:

Reservieren des mindestens einen Paketdatenflusses, aus dem Pufferspeicher ausgegeben zu werden,
Erfassen des Ablaufs einer vorbestimmten Zeitspanne (Tmax), während derer der reservierte Paketdatenfluss auszugeben ist,
Ausgeben des Paketdatenflusses während der vorbestimmten Zeitspanne,

**gekennzeichnet durch** den Schritt

bei Erfassung des Ablaufs der Zeitspanne (Tmax):

Verlängern der Zeitspanne (Tmax), während derer der reservierte Paketdatenfluss auszugeben ist, auf eine verlängerte Zeitspanne (k*Tmax), abhängig von
der Datenmenge, die bei der Erfassung noch im Pufferspeicher vorhanden ist, und
einer Ausgaberate des Paketdatenflusses.

**2.** Verfahren gemäß Anspruch 1, bei dem eine erforderliche Übertragungszeit (TT) zum Ausgeben der Datenmenge, die bei der Erfassung noch im Pufferspeicher vorhanden ist, durch Teilen der bei der Erfassung noch im Pufferspeicher vorhandenen Datenmenge durch die Ausgaberate des Datenflusses berechnet wird.

**3.** Verfahren gemäß Anspruch 2, bei dem ein Ausgeben von Daten aus dem Pufferspeicher bei der Erfassung gestoppt wird, falls die erforderliche Übertragungszeit (TT) größer ist als die Differenz (k*Tmax - Tmax) zwischen der verlängerten Zeitspanne und der vorbestimmten Zeitspanne.

**4.** Verfahren gemäß Anspruch 2, bei dem ein Ausgeben von Daten aus dem Pufferspeicher bei der Erfassung fortgesetzt wird, falls die erforderliche Übertragungszeit (TT) nicht größer ist als die Differenz (k*Tmax - Tmax) zwischen der verlängerten Zeitspanne und der vorbestimmten Zeitspanne.

**5.** Verfahren gemäß Anspruch 4, bei dem ein Ausgeben von Daten aus dem Pufferspeicher bei der Erfassung fortgesetzt wird, bis alle bei der Erfassung im Pufferspeicher vorhandenen Daten ausgegeben sind.

**6.** Verfahren gemäß Anspruch 4 oder 5, bei dem ein Fortsetzen des Ausgebens von Daten aus dem Pufferspeicher nur für diejenigen Daten durchgeführt wird, die bei der Erfassung im Pufferspeicher vorhanden sind, während Daten, die nach der Erfassung an dem Pufferspeicher angekommen sind, in dem Pufferspeicher zwischengespeichert werden.

**7.** Verfahren gemäß Anspruch 5 oder 6, bei dem die Reservierung des mindestens einen Paketdatenflusses zum Ausgegebenwerden aus dem Pufferspeicher aufgehoben wird, wenn die bei der Erfassung im Pufferspeicher vorhandenen Daten ausgegeben sind.

**8.** Verfahren gemäß Anspruch 3, bei dem die Reservierung des mindestens einen Paketdatenflusses zum Ausgegebenwerden aus dem Pufferspeicher aufgehoben wird, wenn die erforderliche Übertragungszeit (TT) größer ist als die Differenz (k*Tmax - Tmax) zwischen der verlängerten Zeitpanne und der vorbestimmten Zeitspanne.

**9.** Verfahren gemäß Anspruch 7 oder 8, bei dem eine Reservierung eines anderen der Paketdatenflüsse aktiviert wird, falls die Reservierung des mindestens einen Paketdatenflusses zum Ausgegebenwerden aus dem Pufferspeicher aufgehoben wird.

**10.** Verfahren gemäß Anspruch 1, bei dem die vorbestimmte Zeit (Tmax) für einen jeweiligen Paketdatenfluss vorbestimmt ist.

**11.** Verfahren gemäß Anspruch 1 oder 10, bei dem die vorbestimmte Zeit (Tmax) von einer jeweiligen Bitrate abhängig ist.

**12.** Verfahren gemäß Anspruch 1, 10 oder 11, bei dem die vorbestimmte Zeit (Tmax) von einer Anzahl von zeitlich einzuplanenden Paketdatenflüssen abhängig ist.

**13.** Verfahren gemäß Anspruch 1, bei dem die verlängerte Zeitspanne durch Multiplizieren der vorbestimmten Zeitspanne (Tmax) mit einem Verlängerungskoeffizienten (k) erhalten wird.

**14.** Verfahren gemäß Anspruch 13, bei dem der Verlängerungskoeffizient (k) vorbestimmte und festgelegt ist.

**15.** Verfahren gemäß Anspruch 13, bei dem der Verlängerungskoeffizient (k) dynamisch bestimmt wird.

**16.** Verfahren gemäß Anspruch 15, bei dem der Verlängerungskoeffizient (k) basierend auf einer Anzahl (n) von Reservierungsperioden dynamisch bestimmt wird, für die der Paketdatenfluss reserviert wurde, aus dem Pufferspeicher ausgegeben zu werden.

**17.** Verfahren gemäß Anspruch 16, bei dem der Verlängerungskoeffizient gemäß der folgenden Vorschrift dynamisch bestimmt wird:

$$k(n) = f_1(n)/f_2(n), \text{ für } 0 <= n < x,$$

$$k(n) = 1, \text{ andernfalls,}$$

wobei $f_1(n)$, $f_2(n)$ eine Funktion von n sind, so dass für jeden Wert von n mit $0 <= n < x$ der Wert von $f_1(n) > f_2(n)$ gilt, und wobei x eine natürliche Zahl größer oder gleich 1 ist.

**18.** Paketdaten-Zeitablaufplanungseinrichtung, angepasst zum Durchführen des Verfahrens gemäß einem der vorhergehenden Ansprüche 1 bis 17.

**19.** Zeitablaufplanungseinrichtung gemäß Anspruch 18, bei der der Paketdatenfluss ein Abwärtsstrecken-Paketdatenfluss in einem Funkkommunikationsnetzwerk ist, und die Zeitablaufplanungseinrichtung in einer Funknetzwerksteuerung implementiert ist.

**20.** Zeitablaufplanungseinrichtung gemäß Anspruch 18, bei der der Paketdatenfluss ein Aufwärtsstrecken-Paketdatenfluss in einem Funkkommunikationsnetzwerk ist, und die Zeitablaufplanungseinrichtung in einem Teilnehmerendgerät implementiert ist.

**Revendications**

**1.** Procédé d'ordonnancement de données par paquets d'au moins un flot de données par paquets dans un réseau à commutation de paquets, ledit au moins un flot de données par paquets passant à travers une mémoire tampon (1, BUT_1, BUF_i, BUF_N), le procédé comprenant les étapes consistant à :

attribuer ledit au moins un flot de données par paquets de façon à ce qu'il soit délivré en sortie par ladite mémoire tampon ;
détecter la durée d'une période de temps prédéterminée (Tmax), au cours de laquelle ledit flot de données par paquets attribué doit être délivré en sortie ;
délivrer en sortie ledit flot de données par paquets durant la période de temps prédéterminée ;

**caractérisé en ce que**
une fois détectée la durée de ladite période de temps (Tmax),
prolonger ladite période de temps (Tmax), durant laquelle ledit flot de données par paquets attribué doit être délivré en sortie, de sorte qu'elle atteigne une période de temps prolongée (k*Tmax), dépendant de :

la quantité de données encore présente dans ladite mémoire tampon au moment de ladite détection ; et
un débit de sortie dudit flot de données par paquets.

**2.** Procédé selon la revendication 1, dans lequel
un temps de transmission (TT) nécessaire pour délivrer en sortie ladite quantité de données encore présente dans ladite mémoire tampon au moment de ladite détection est calculé en divisant ladite quantité de données encore présente dans ladite mémoire tampon au moment de ladite détection par ledit débit de sortie dudit flot de données.

**3.** Procédé selon la revendication 2, dans lequel
si ledit temps de transmission (TT) nécessaire est supérieur à la différence (k*Tmax - Tmax) entre la période de temps prolongée et ladite période de temps prédéterminée, la délivrance des données en sortie à partir de ladite mémoire tampon est arrêtée au moment de ladite détection.

**4.** Procédé selon la revendication 2, dans lequel
si ledit temps de transmission (TT) nécessaire n'est pas supérieur à la différence (k*Tmax - Tmax) entre la période de temps prolongée et ladite période de temps prédéterminée, la délivrance des données en sortie à partir de ladite mémoire tampon est poursuivie lors de ladite détection.

**5.** Procédé selon la revendication 4, dans lequel
la délivrance des données en sortie à partir de ladite mémoire tampon est poursuivie lors de ladite détection jusqu'à ce que toutes les données présentes dans ladite mémoire tampon au moment de ladite détection aient été délivrées en sortie.

**6.** Procédé selon la revendication 4 ou 5, dans lequel
la poursuite de la délivrance des données en sortie à partir de ladite mémoire tampon est exécutée uniquement pour ces données qui sont présentes dans ladite mémoire tampon au moment de ladite détection, tandis que les données qui sont arrivées au niveau de ladite mémoire tampon après ladite détection sont mises en tampon dans ladite mémoire tampon.

**7.** Procédé selon la revendication 5 ou 6, dans lequel
ladite attribution dudit au moins un flot de données par paquets destiné à être délivré en sortie à partir de ladite mémoire tampon est annulée,
si lesdites données présentes dans ladite mémoire tampon au moment de ladite détection sont délivrées en sortie.

**8.** Procédé selon la revendication 3, dans lequel
ladite attribution dudit au moins un flot de données par paquets destiné à être délivré en sortie à partir de ladite mémoire tampon est annulée,
si ledit temps de transmission (TT) nécessaire est supérieur à la différence (k*Tmax - Tmax) entre la période de temps prolongée et ladite période de temps prédéterminée.

**9.** Procédé selon la revendication 7 ou 8, dans lequel
si ladite attribution dudit au moins un flot de données par paquets destiné à être délivré en sortie à partir de ladite mémoire tampon est annulée, une attribution d'un autre desdits flots de données par paquets est activée.

**10.** Procédé selon la revendication 1, dans lequel
ladite période de temps prédéterminée (Tmax) est prédéterminée pour un flot de données par paquets respectif.

**11.** Procédé selon la revendication 1 ou 10, dans lequel
ladite période de temps prédéterminée (Tmax) est fonction d'un débit binaire respectif.

**12.** Procédé selon la revendication 1, 10 ou 11, dans lequel
ladite période de temps prédéterminée (Tmax) est fonction d'un nombre de flots de données par paquets qui doit être ordonnancé.

**13.** Procédé selon la revendication 1, dans lequel
ladite période de temps prolongée est obtenue en multipliant ladite période de temps prédéterminée (Tmax) par un coefficient de prolongation (k).

**14.** Procédé selon la revendication 13, dans lequel

ledit coefficient de prolongation (k) est prédéterminé et fixe.

**15.** Procédé selon la revendication 13, dans lequel ledit coefficient de prolongation (k) est déterminé de façon dynamique.

**16.** Procédé selon la revendication 15, dans lequel ledit coefficient de prolongation (k) est déterminé de façon dynamique en se basant sur un nombre de périodes d'attribution (n) durant lesquelles ledit flot de données par paquets a été attribué pour être délivré en sortie à partir de ladite mémoire tampon.

**17.** Procédé selon la revendication 16, dans lequel ledit coefficient de prolongation est déterminé de façon dynamique conformément à la règle :

$$k(n) = f_1(n)/f_2(n) \text{ pour } 0 <= n < x$$

$$k(n) = 1 \text{ sinon,}$$

$f_1(n)$, $f_2(n)$ étant une fonction de n telle que la valeur de $f_1(n) > f_2(n)$ pour n'importe quelle valeur de n, avec $0 <= n < x$, et x étant un nombre entier naturel égal à ou plus grand que 1.

**18.** Ordonnanceur de données par paquets adapté pour exécuter le procédé selon l'une quelconque des revendications précédentes 1 à 17.

**19.** Ordonnanceur selon la revendication 18, dans lequel
ledit flot de données par paquets est un flot de données par paquets sur le trajet descendant dans un réseau de communications radio ; et
ledit ordonnanceur est mis en oeuvre dans un contrôleur de réseau de communications radio.

**20.** Ordonnanceur selon la revendication 18, dans lequel
ledit flot de données par paquets est un flot de données par paquets sur le trajet ascendant dans un réseau de communications radio ; et
ledit ordonnanceur est mis en oeuvre dans un terminal d'abonné.

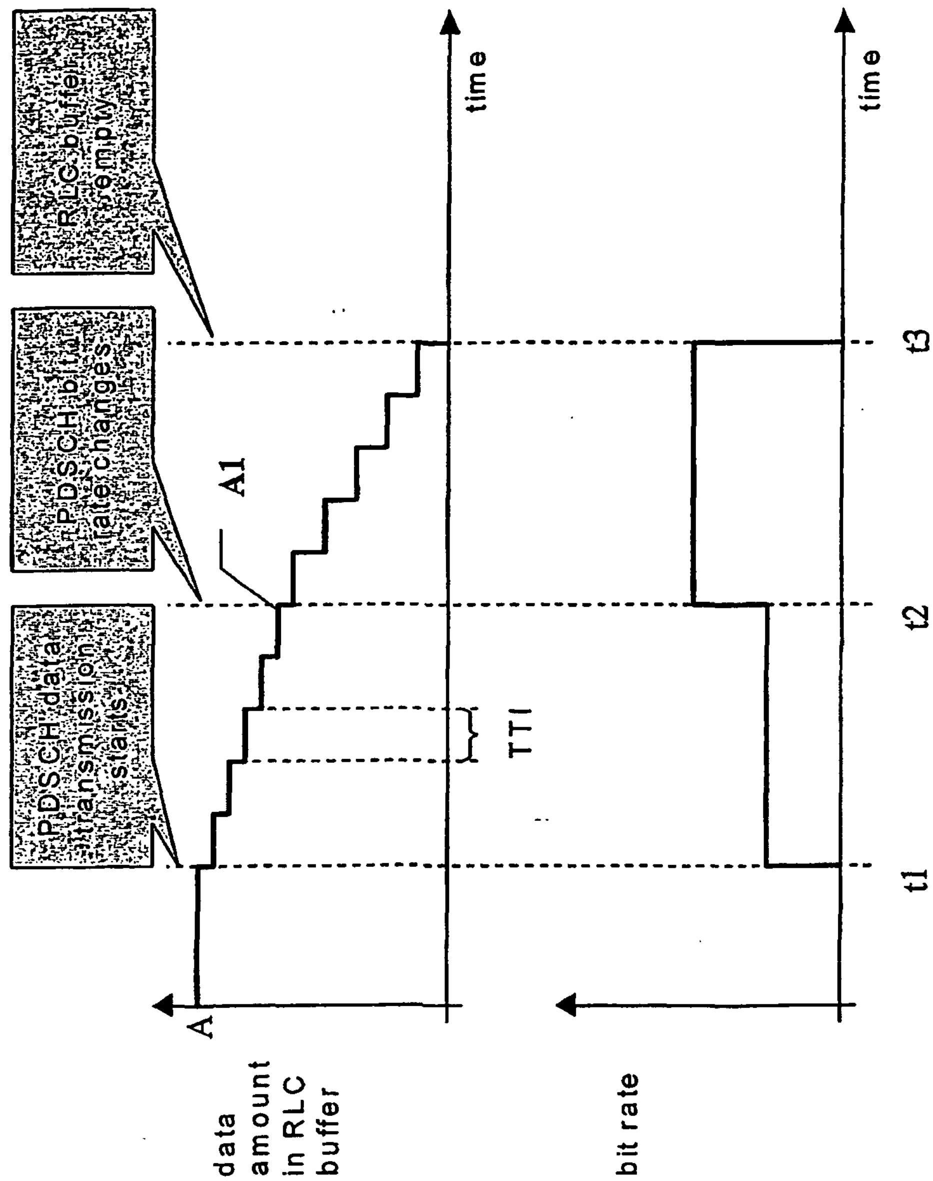
PDSCH data transmission starts
PDSCH bit rate changes
RLC buffer empty
A1
TTI
time
time
t1
t2
t3
A
data amount in RLC buffer
bit rate

*FIG. 1*

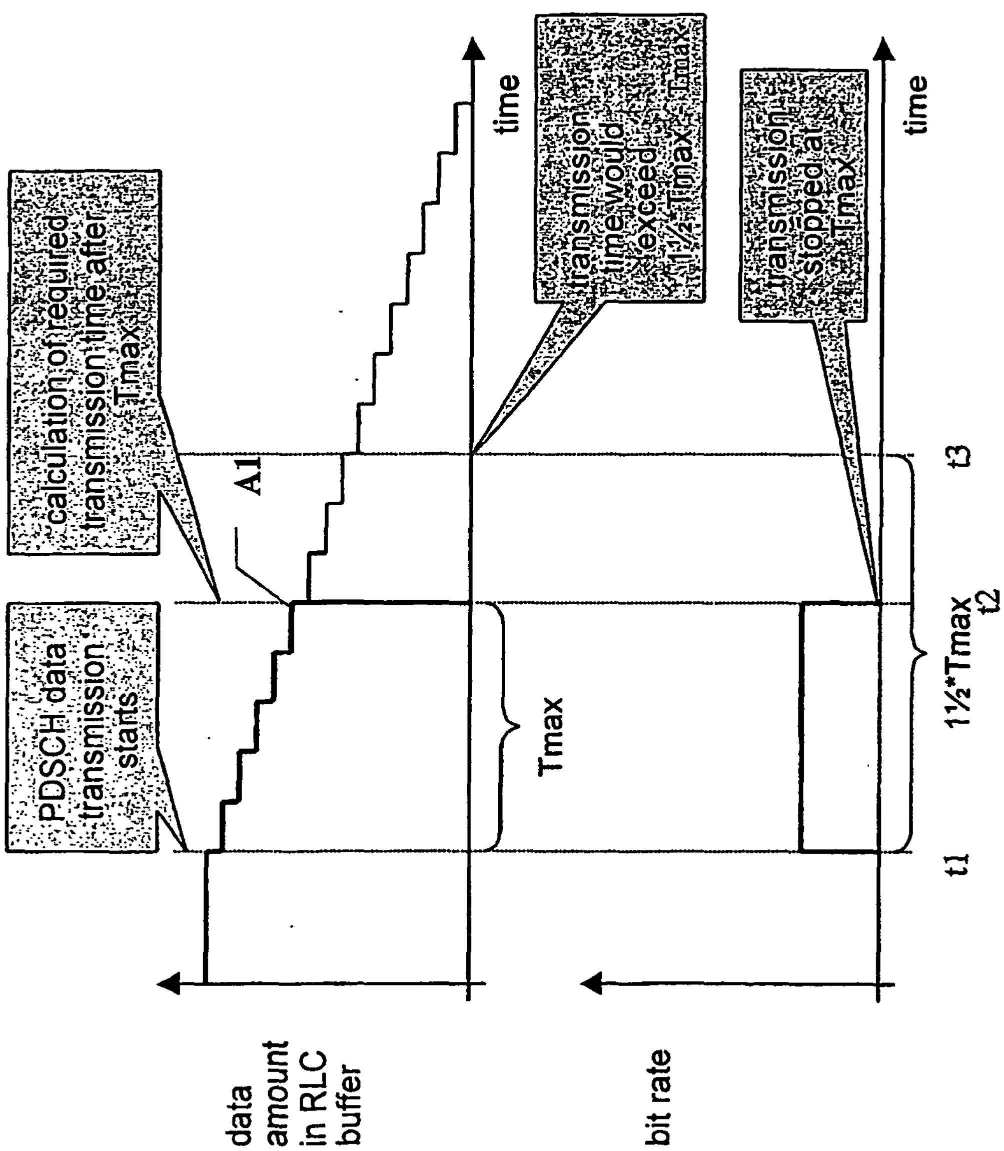
PDSCH data transmission starts
calculation of required transmission time after Tmax
A1
transmission time would exceed 1½ Tmax
transmission stopped at 1½ Tmax
time
time
Tmax
1½*Tmax
t1
t2
t3
data amount in RLC buffer
bit rate

*FIG. 2*

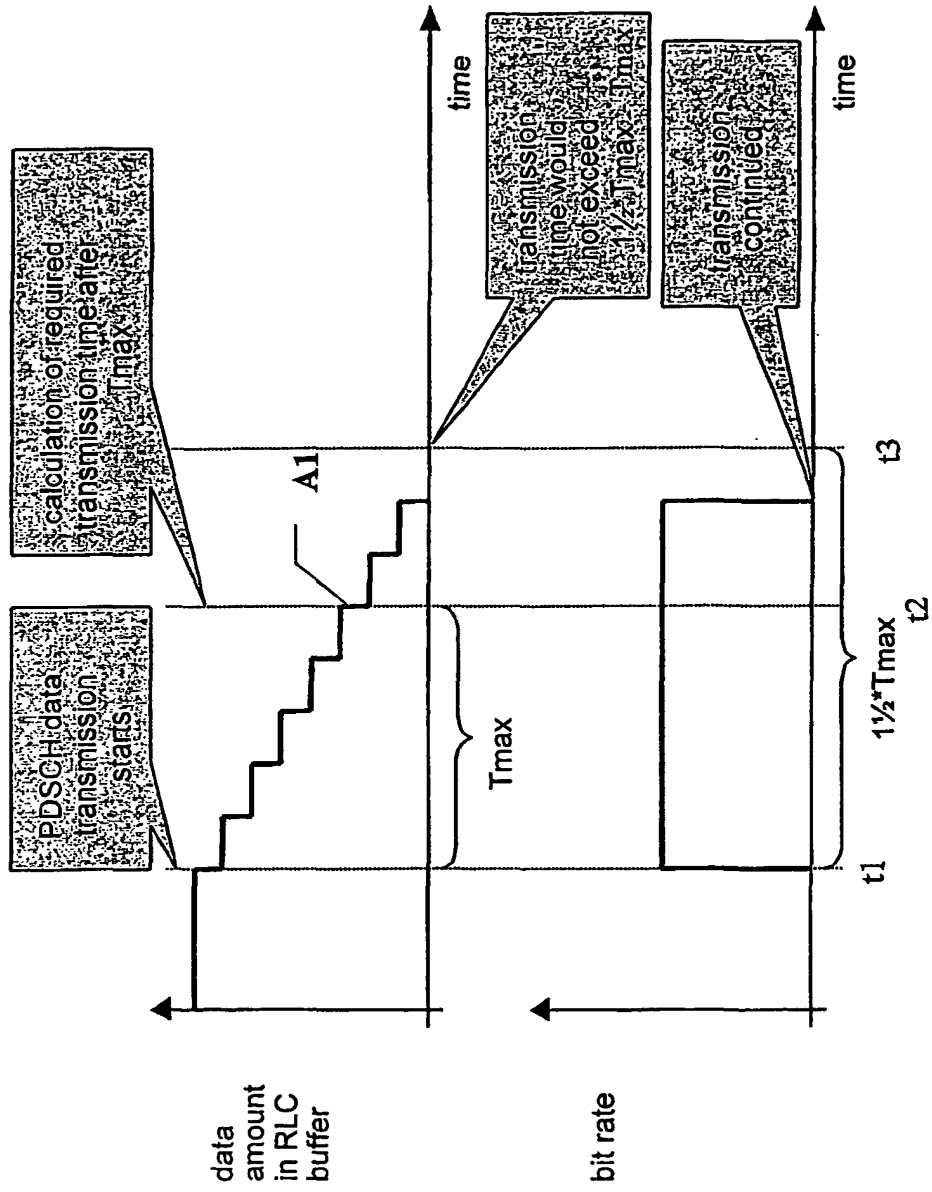

PDSCH data transmission starts
calculation of required transmission time after Tmax
transmission time would not exceed 1½*Tmax
transmission continued
A1
Tmax
1½*Tmax
t1
t2
t3
time
time
data amount in RLC buffer
bit rate


FIG. 3

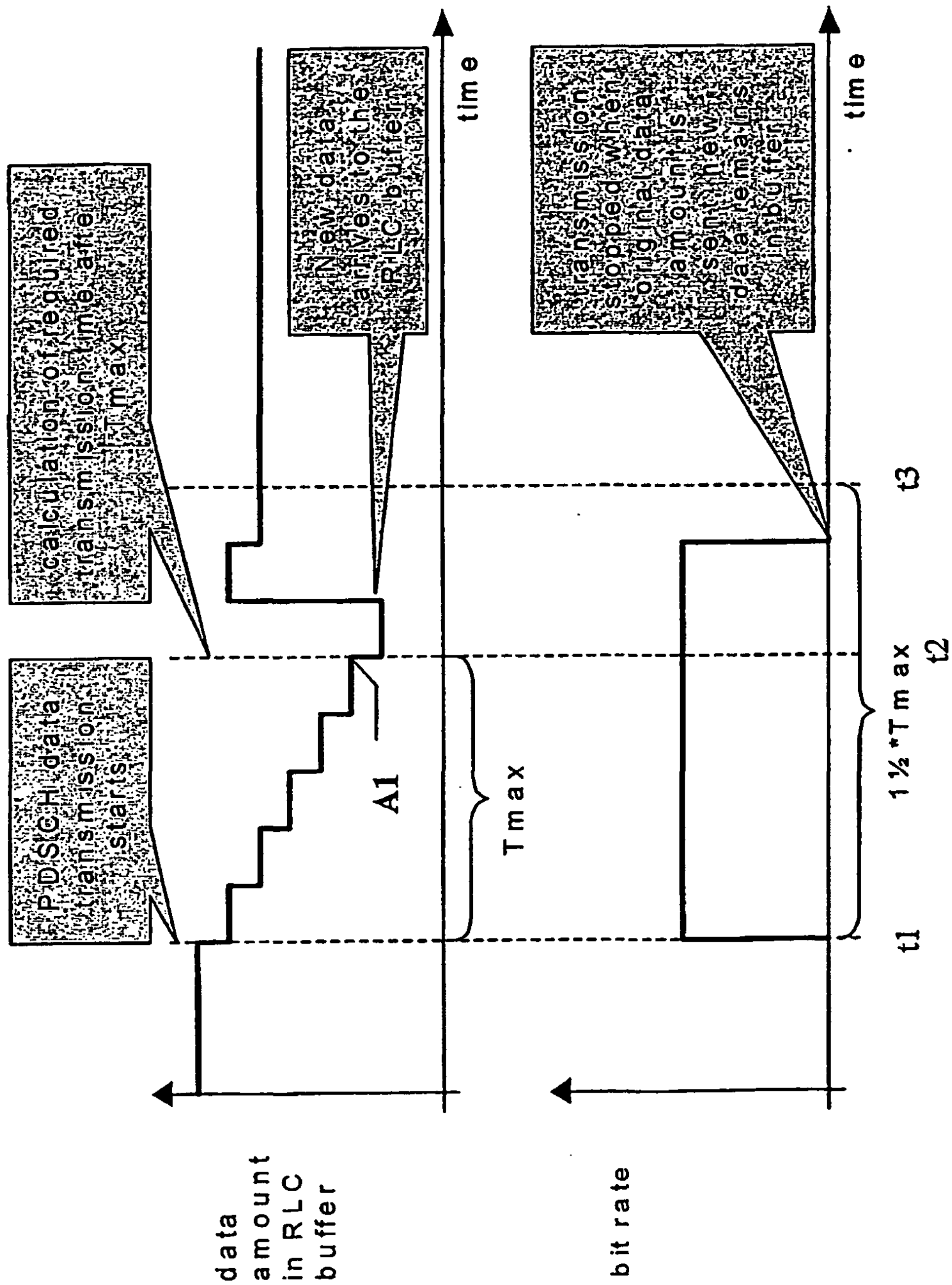
PDSCH data transmission starts
calculation of required transmission time after Tmax
New data arrives to the RLC buffer
transmission is stopped when original data amount is sent, new data remains in buffer
A1
Tmax
time
time
1½ *Tmax
t1
t2
t3
data amount in RLC buffer
bit rate

*FIG. 4*

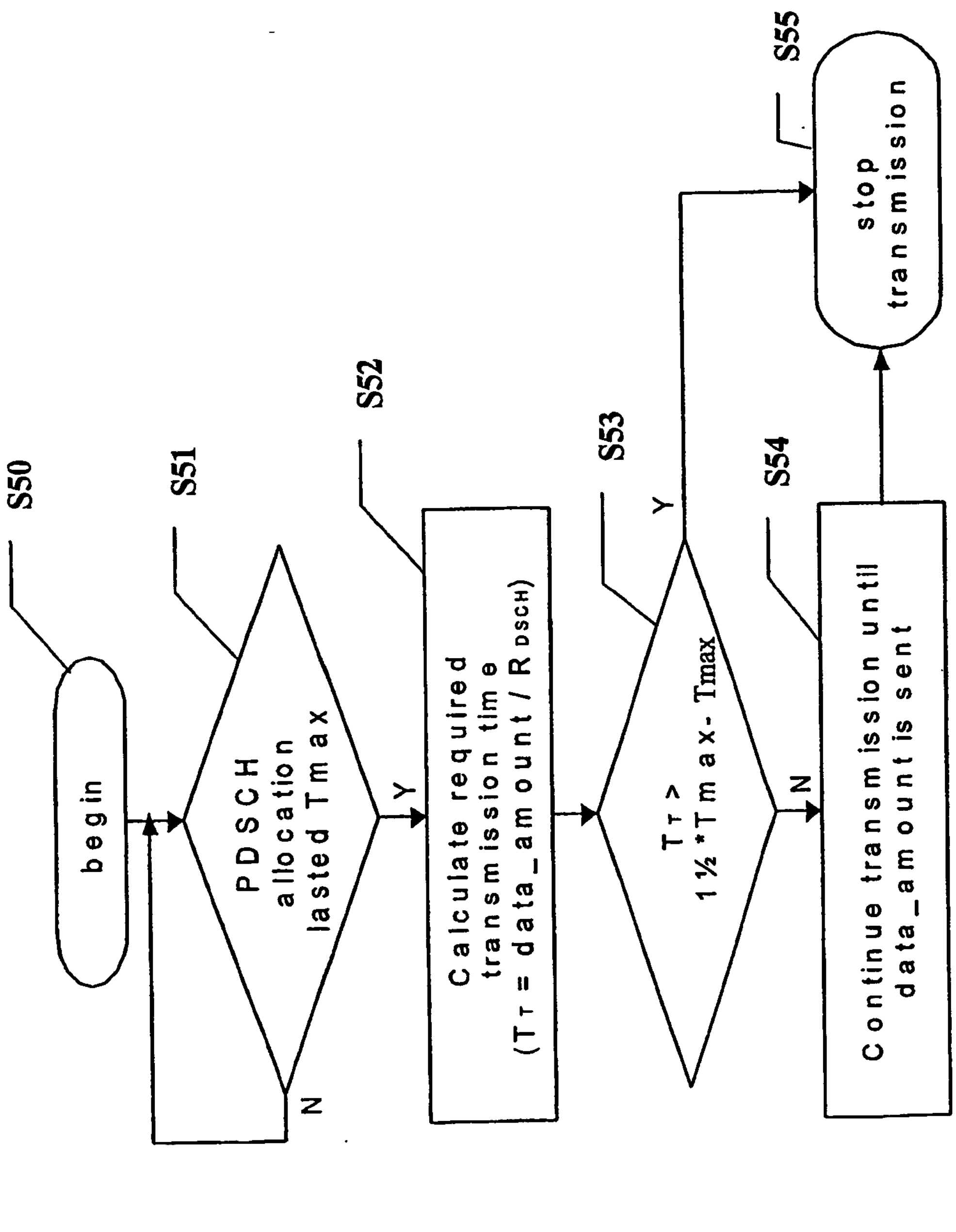
S50
begin
S51
PDSCH allocation lasted Tmax
Y
N
S52
Calculate required transmission time
(T_T = data_amount / R_DSCH)
S53
T_T > 1 ½ *Tmax - Tmax
Y
N
S54
Continue transmission until data_amount is sent
S55
stop transmission

*FIG. 5*

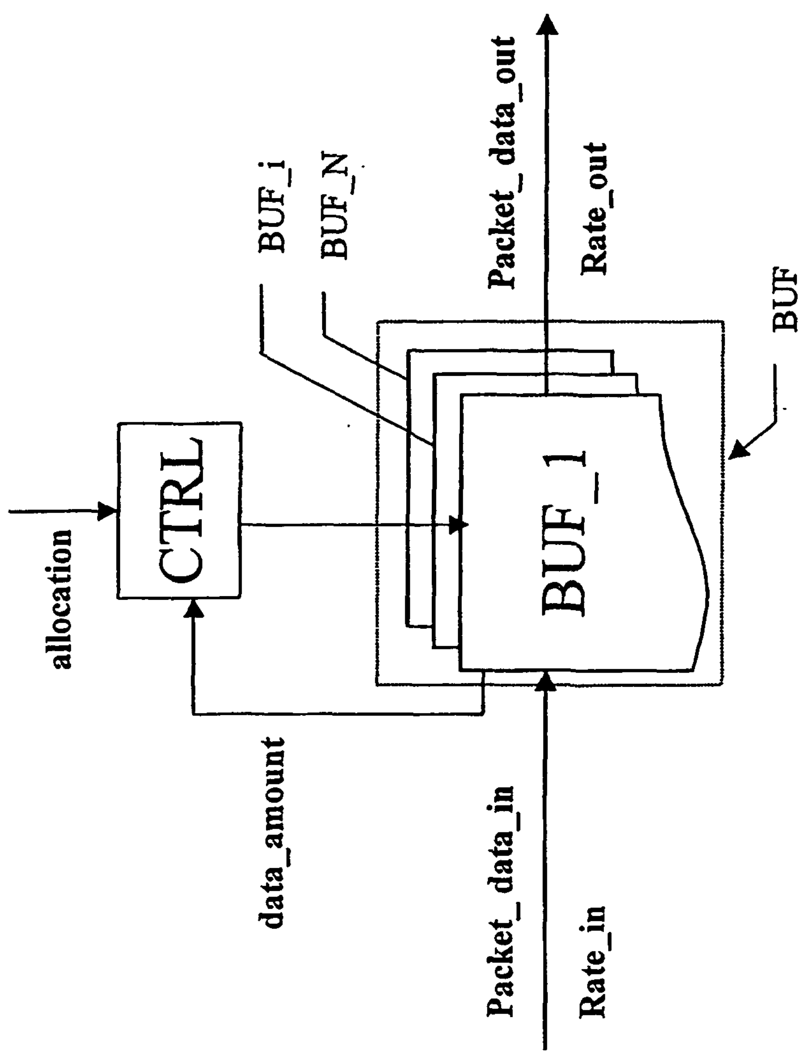
allocation
CTRL
data_amount
BUF_i
BUF_N
BUF_1
BUF
Packet_data_out
Rate_out
Packet_ data_in
Rate_in

*FIG. 6*

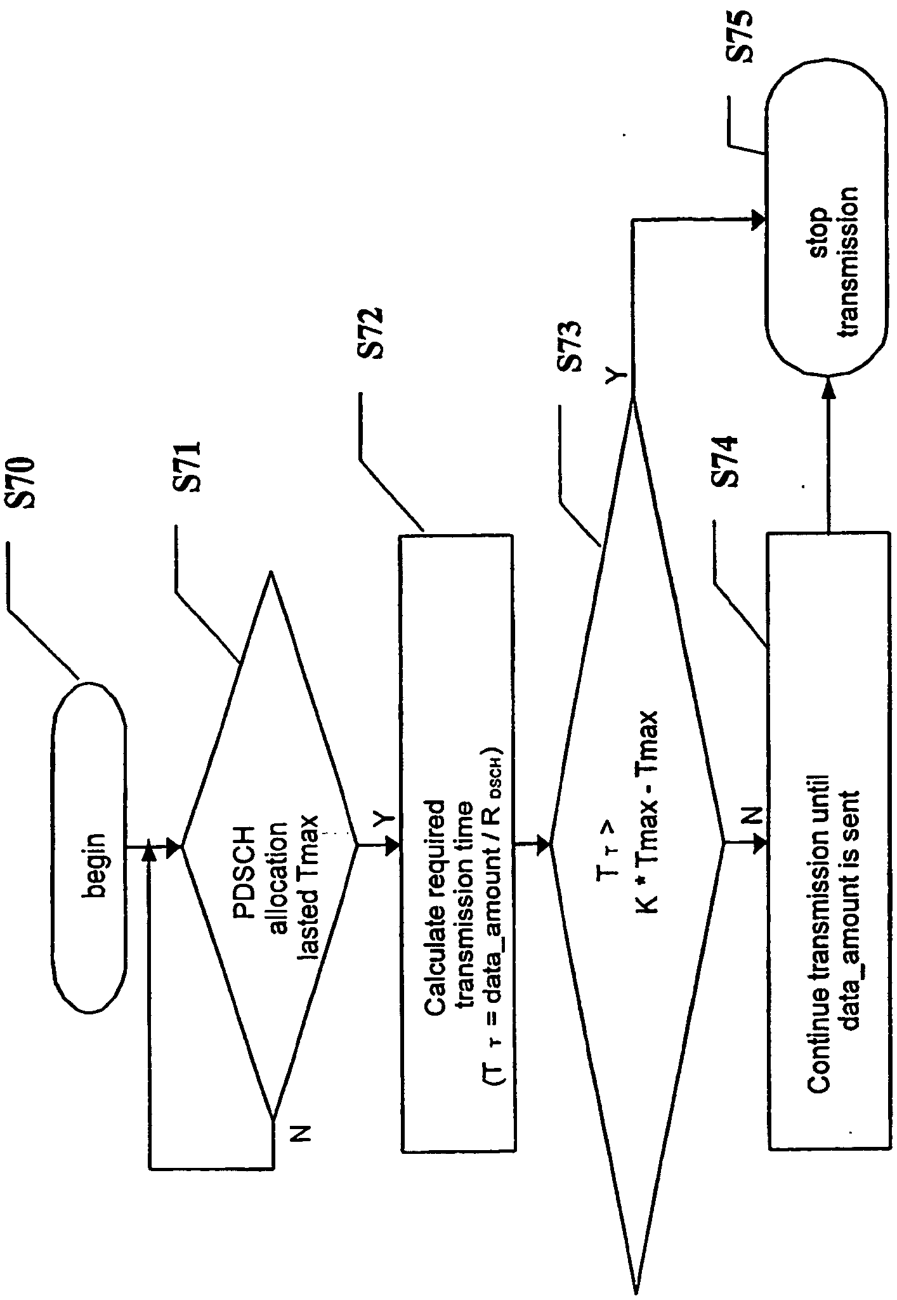
S70
begin
S71
PDSCH
allocation
lasted Tmax
Y
N
S72
Calculate required
transmission time
(T T = data_amount / R DSCH)
S73
T T >
K * Tmax - Tmax
Y
N
S74
Continue transmission until
data_amount is sent
S75
stop
transmission

*FIG. 7*